# EUROPEAN PATENT SPECIFICATION

(11) **EP 3 696 478 B1**
(45) Date of publication and mention of the grant of the patent: **24.01.2024**
(21) Application number: 20156044.8
(22) Date of filing: 07.02.2020
(51) Int. Cl.: F25B 9/00, F25B 47/02, F25B 49/02, F25B 40/02

(54) **HEAT PUMP SYSTEM**
WÄRMEPUMPENSYSTEM
SYSTÈME DE POMPE À CHALEUR

(30) Priority: 15.02.2019 JP 2019025292; 07.06.2019 JP 2019106605
(43) Date of publication of application: 19.08.2020
(73) Proprietor: Panasonic Intellectual Property Management Co., Ltd., Osaka-shi, Osaka 540-6207 (JP)
(72) Inventor: HSU, Chihsuan, Osaka, 540-6207 (JP); ISAYAMA, Yasuhiko, Osaka, 540-6207 (JP); YAMAOKA, Yuki, Osaka, 540-6207 (JP); MORIWAKI, Shunji, Osaka, 540-6207 (JP); MACHIDA, Kazuhiko, Osaka, 540-6207 (JP); NAKATANI, Kazuhito, Osaka, 540-6207 (JP); IMAGAWA, Tsuneko, Osaka, 540-6207 (JP); KOISHIHARA, Kazuki, Osaka, 540-6207 (JP); AOYAMA, Shigeo, Osaka, 540-6207 (JP)
(74) Representative: Eisenführ Speiser

(56) References cited:
- WO-A1-2010/143373
- JP-A- 2011 137 602
- JP-A- 2014 134 316

## Description

### [TECHNICAL FIELD]

The present invention relates to a heat pump system.

### [BACKGROUND TECHNIQUE]

As a heat pump system of this kind, there is conventionally disclosed a refrigeration cycle device having a two-stage compression mechanism in which a portion of refrigerant is expanded from a downstream side of a usage-side heat exchanger, and intermediate refrigerant is bypassed to a middle stage location of compression of the two-stage compression mechanism (see patent document 1 for example).

Fig. 4 shows the conventional refrigeration cycle device described in patent document 1.

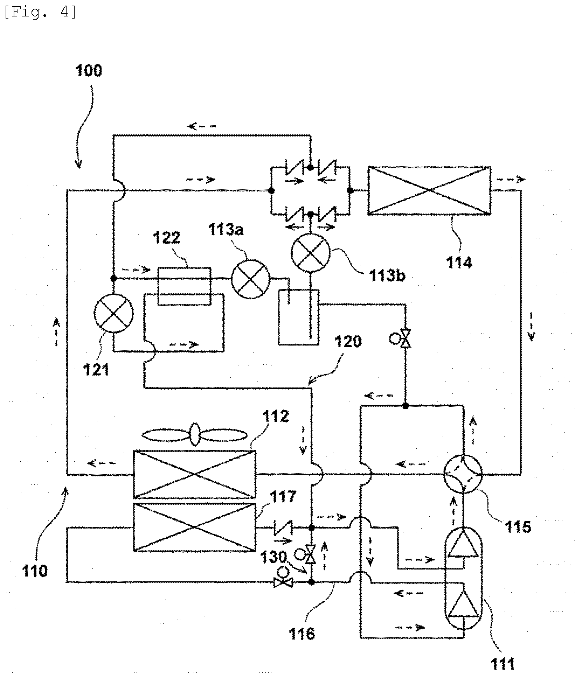

As shown in Fig. 4, the refrigeration cycle device 100 includes a refrigerant circuit 110 through which refrigerant is circulated, and a rear stage-side injection pipe 120. A compression mechanism 111 having a plurality of compression rotation elements which are connected to one another in series, a heat source-side heat exchanger 112, an economizer heat exchanger (intermediate heat exchanger, hereinafter) 122, expansion mechanisms 113a and 113b and a usage-side heat exchanger 114 are annularly connected to the refrigerant circuit 110 through a pipe. The refrigerant circuit 110 includes a switching mechanism 115 for switching over between a heating operation and a cooling operation.

The refrigeration cycle device 100 is provided with an intermediate refrigerant pipe 116 for allowing refrigerant discharged from a front stage-side compression mechanism to be sucked into a rear stage-side compression rotation element. The intermediate refrigerant pipe 116 is provided with an intermediate cooler 117 which functions as a cooler of refrigerant discharged from the front stage-side compression rotation element and sucked into the rear stage-side compression rotation element. The intermediate refrigerant pipe 116 is provided with an intermediate cooler bypass pipe 130. The intermediate cooler bypass pipe 130 is connected such that refrigerant discharged from the front stage-side compression rotation element bypasses the intermediate cooler 117.

The rear stage-side injection pipe 120 is connected such that refrigerant which branches off from the refrigerant circuit 110 between the heat source-side heat exchanger 112 and the usage-side heat exchanger 114 returns to the rear stage-side compression rotation element of the compression mechanism 111. The injection pipe 120 is provided with a rear stage-side injection valve 121 whose opening degree can be controlled.

Further, the refrigeration cycle device 100 carries out a reverse cycle defrosting operation for defrosting the heat source-side heat exchanger 112 by switching the switching mechanism 115 into the cooling operation. In the reverse cycle defrosting operation, refrigerant is made to flow into the heat source-side heat exchanger 112, the intermediate cooler 117 and the rear stage-side injection pipe 120. If it is detected that the defrosting operation of the intermediate cooler 117 is completed during the reverse cycle defrosting operation, control is performed such that refrigerant does not flow into the intermediate cooler 117 using the intermediate cooler bypass pipe 130, and control is performed such that the opening degree of the rear stage-side injection valve 121 is increased.

From Patent Document 2, a heat pump unit and a heating system are known. The heat pump unit has a refrigeration circuit including a gas cooler, an economizer heat exchanger, a heater, a first expansion device, a heat source side heat exchanger and a compression mechanism having two stages. Between the gas cooler and the economizer heat exchanger, a bypass circuit including a second expansion device branches off. A drain pan is installed above the heater for heating the drain pan in a defrosting operation. In more details, Patent Document 2 discloses a heat pump system comprising a refrigeration cycle device, a usage-side heat medium circuit which circulates usage-side heat medium by a conveying device, and a control device, in which the refrigeration cycle device includes: a main refrigerant circuit formed by sequentially connecting, to one another through a pipe, a compression mechanism composed of a compression rotation element, a usage-side heat exchanger for heating the usage-side heat medium by refrigerant discharged from the compression mechanism, an intermediate heat exchanger, a first expansion device and a heat source-side heat exchanger; and a bypass refrigerant circuit which is branched off from the pipe between the usage-side heat exchanger and the first expansion device and joins up with refrigerant which is in middle of a compression operation of the compression rotation element, the bypass refrigerant circuit provides a second expansion device; and the refrigerant flowing in the bypass refrigerant circuit downstream side from the second expansion device is exchanging heat with the refrigerant flowing in the main refrigerant circuit in the intermediate heat exchanger; wherein the heat pump system includes a heating operation mode in which the usage-side heat medium is heated in the usage-side heat exchanger by refrigerant discharged from the compression mechanism, and the refrigerant flows through the compression mechanism, the usage-side heat exchanger, the intermediate heat exchanger, the first expansion device and the heat source-side heat exchanger in this order in a defrosting operation mode in which the heat source-side heat exchanger is defrosted by refrigerant discharged from the compression mechanism.

Patent Document 3 discloses a refrigeration unit that includes a drain pan disposed below a cooler, a drain pan heating pipeline attached to the drain pan, a hot gas bypass pipe which is branched from the downstream side of a two-stage compressor and is united to the upstream side of the cooler, a second branch pipeline which is branched from the upstream side of a main expansion valve and is united to the upstream side of the cooler, and a heat recovery device which heats a refrigerant flowing between a heat recovery expansion valve and the drain pan heating pipeline. Prior to a defrosting operation mode, the system has a defrosting preparation operation mode for heating the drain pan.

A heat pump system according to Patent Document 4 comprises a heat pump circuit that includes a compressor, a heat sink for exchanging heat between refrigerant and a heat storage fluid, an expansion means and an evaporator. A defrost path includes a refrigerant heater arranged parallel to the evaporator, and a refrigerant pump for circulating refrigerant heated by the heat storage medium in the refrigerant heater through the evaporator during a defrosting operation.

### [PRIOR ART DOCUMENTS]

### [PATENT DOCUMENTS]

[Patent Document 1] Japanese Patent Application Laid-open No.2009-133581
[Patent Document 2] Japanese Patent Application Laid-open No.2011-137602
[Patent Document 3] Japanese Patent Application Laid-open No.2014-134316
[Patent Document 4] PCT patent application WO 2010/143373

### [SUMMARY OF THE INVENTION]

### [PROBLEM TO BE SOLVED BY THE INVENTION]

According to the conventional configuration, however, since low temperature refrigerant which is defrosted and cooled by the heat source-side heat exchanger 112 flows into the usage-side heat exchanger 114, temperature of the usage-side heat exchanger 114 is lowered when the heating operation is started after the reverse cycle defrosting operation is completed.

Hence, there can be proposed a forward cycle defrosting operation in which refrigerant flows through the compression mechanism 111, the usage-side heat exchanger 114, the intermediate heat exchanger 122, the expansion mechanism 113a, the expansion mechanism 113b and the heat source-side heat exchanger 112 in this order.

However, in this configuration, refrigerant in the refrigerant circuit 110 is cooled by the intermediate heat exchanger 122 and then, the refrigerant flows into the heat source-side heat exchanger 112 and is defrosted. Therefore, a heat amount of high temperature refrigerant discharged from the compression mechanism 111 is reduced by the intermediate heat exchanger 122 and the refrigerant is supplied to the heat source-side heat exchanger 112. Therefore, the defrosting time becomes long and there is a problem that usability is deteriorated.

The present invention is accomplished to solve the conventional problem, and it is an object of the invention to provide a heat pump system which shortens the defrosting time and enhances the usability.

### [MEANS FOR SOLVING THE PROBLEM]

To solve the conventional problem, the present invention provides a heat pump system according to independent claim 1. The heat pump system includes a refrigeration cycle device, a usage-side heat medium circuit which circulates usage-side heat medium by a conveying device, and a control device, in which the refrigeration cycle device includes: a main refrigerant circuit formed by sequentially connecting, to one another through a pipe, a compression mechanism composed of a compression rotation element, a usage-side heat exchanger for heating the usage-side heat medium by refrigerant discharged from the compression mechanism, an intermediate heat exchanger, a first expansion device and a heat source-side heat exchanger; and a bypass refrigerant circuit which is branched off from the pipe between the usage-side heat exchanger and the first expansion device and joins up with refrigerant which is in middle of a compression operation of the compression rotation element, and the bypass refrigerant circuit provides a second expansion device, and the refrigerant flowing in the bypass refrigerant circuit downstream side from the second expansion device is exchanging heat with the refrigerant flowing in the main refrigerant circuit in the intermediate heat exchanger, wherein the heat pump system includes a heating operation mode in which the usage-side heat medium is heated in the usage-side heat exchanger by refrigerant discharged from the compression mechanism, and the refrigerant flows through the compression mechanism, the usage-side heat exchanger, the intermediate heat exchanger, the first expansion device and the heat source-side heat exchanger in this order in a defrosting operation mode in which the heat source-side heat exchanger is defrosted by refrigerant discharged from the compression mechanism, the control device sets the opening degree of the second expansion device to a fully closed opening degree when the heating operation mode is shifted to the defrosting operation mode during execution of the heating operation mode, and the control device stops operation of the conveying device, and stops the heating operation mode after closing fully the opening degree of the second expansion device, and shifts to the defrosting operation mode by stopping of the heating operation mode and setting an opening degree of the first expansion valve to a fully opened opening degree.

According to this, a flow rate of refrigerant which joins up, from the bypass refrigerant circuit, with another refrigerant which is in middle of a compression operation of the compression rotation element is reduced. Therefore, it is possible to rise temperature of refrigerant discharged from the compression mechanism and to lower the discharge pressure.

While this high temperature discharged refrigerant flows on the high pressure side of the main refrigerant circuit during execution of the heating operation mode, constituent parts such as the compression mechanism and the usage-side heat exchanger are heated. Therefore, temperature of the compression mechanism and the usage-side heat exchanger rises.

Since the operation of the conveying device is also stopped, a heat radiation amount to the usage-side heat medium in the usage-side heat exchanger is suppressed, and temperature and pressure of refrigerant discharged from the compression mechanism further rise. Hence, temperature of the compression mechanism and the usage-side heat exchanger further rises.

The discharge pressure is once lowered when the valve opening degree of the second expansion device is operated in its closing direction. Therefore, if the operational action of the conveying device is stopped after the valve opening degree of the second expansion device is operated in the closing direction, it is possible to prevent temperature and pressure of refrigerant discharged from the compression mechanism from excessively rising.

When the operation mode is shifted to the defrosting operation mode, the opening degree of the second expansion device is operated in the closing direction during execution of the heating operation mode before execution of the defrosting operation mode is started, and temperature and pressure of refrigerant discharged from the compression mechanism are increased in a stepwise manner. According to this, it is possible to prevent the heating operation mode from being stopped by excessive increase of temperature and pressure of the refrigerant discharged from the compression mechanism.

In the defrosting operation mode after the operation of the conveying device is stopped, when refrigerant discharged from the compression mechanism flows toward the low pressure side heat source-side heat exchanger, it is possible to obtain not only heat produced in the compression process by the compression rotation element, but also potential heat of the compression mechanism and the usage-side heat exchanger.

According to this, in the defrosting operation mode after the operation of the conveying device is stopped, temperature drop when refrigerant discharged from the compression mechanism flows toward the low pressure side heat source-side heat exchanger can be suppressed, and it is possible to increase the amount of heat which can be utilized for defrosting the heat source-side heat exchanger when the defrosting operation mode is executed. Therefore, it is possible to provide a heat pump system in which the defrosting time is shortened and usability is enhanced.

### [EFFECT OF THE INVENTION]

According to the present invention, it is possible to provide a heat pump system in which the defrosting time is shortened and usability is enhanced.

### [BRIEF DESCRIPTION OF THE DRAWINGS]

Fig. 1 is a block diagram of a heat pump system in an embodiment of the present invention;
Fig. 2 is a flowchart of control of a defrosting operation mode of the heat pump system of the embodiment of the invention;
Fig. 3 is a diagram showing a relation between a flow rate of refrigerant and an opening degree of an expansion device of a refrigeration cycle device in the heat pump system; and
Fig. 4 is a block diagram of a conventional refrigeration cycle device.

### [MODE FOR CARRYING OUT THE INVENTION]

A first invention provides a heat pump system including a refrigeration cycle device, a usage-side heat medium circuit which circulates usage-side heat medium by a conveying device, and a control device, in which the refrigeration cycle device includes: a main refrigerant circuit formed by sequentially connecting, to one another through a pipe, a compression mechanism composed of a compression rotation element, a usage-side heat exchanger for heating the usage-side heat medium by refrigerant discharged from the compression mechanism, an intermediate heat exchanger, a first expansion device and a heat source-side heat exchanger; and a bypass refrigerant circuit which is branched off from the pipe between the usage-side heat exchanger and the first expansion device, in which branched refrigerant is decompressed by a second expansion device and thereafter, heat of the refrigerant is exchanged heat with that of another refrigerant which flows through the main refrigerant circuit by the intermediate heat exchanger, and the former refrigerant joins up with another refrigerant which is in middle of a compression operation of the compression rotation element, wherein the heat pump system includes a heating operation mode in which the usage-side heat medium is heated in the usage-side heat exchanger by refrigerant discharged from the compression mechanism, and a defrosting operation mode in which the heat source-side heat exchanger is defrosted by refrigerant discharged from the compression mechanism, and when the heating operation mode is shifted to the defrosting operation mode during execution of the heating operation mode, the control device sets an opening degree of the second expansion device to a fully closed opening degree and then, the control device stops operation of the conveying device, and stops the heating operation mode.

According to this, a flow rate of refrigerant which joins up, from the bypass refrigerant circuit, with another refrigerant which is in middle of a compression operation of the compression rotation element is reduced. Therefore, it is possible to rise temperature of refrigerant discharged from the compression mechanism and to lower the discharge pressure.

While this high temperature discharged refrigerant flows on the high pressure side of the main refrigerant circuit during execution of the heating operation mode, constituent parts such as the compression mechanism and the usage-side heat exchanger are heated. Therefore, temperature of the compression mechanism and the usage-side heat exchanger rises.

Since the operation of the conveying device is also stopped, a heat radiation amount to the usage-side heat medium in the usage-side heat exchanger is suppressed, and temperature and pressure of refrigerant discharged from the compression mechanism further rise. Hence, temperature of the compression mechanism and the usage-side heat exchanger further rises.

The discharge pressure is once lowered when the valve opening degree of the second expansion device is operated in its closing direction. Therefore, if the operational action of the conveying device is stopped after the valve opening degree of the second expansion device is operated in the closing direction, it is possible to prevent temperature and pressure of refrigerant discharged from the compression mechanism from excessively rising.

When the operation mode is shifted to the defrosting operation mode, the opening degree of the second expansion device is set to a fully closed opening degree during execution of the heating operation mode before execution of the defrosting operation mode is started, and temperature and pressure of refrigerant discharged from the compression mechanism are increased in a stepwise manner. According to this, it is possible to prevent the heating operation mode from being stopped by excessive increase of temperature and pressure of the refrigerant discharged from the compression mechanism.

In the defrosting operation mode after the operation of the conveying device is stopped, when refrigerant discharged from the compression mechanism flows toward the low pressure side heat source-side heat exchanger, it is possible to obtain not only heat produced in the compression process by the compression rotation element, but also potential heat of the compression mechanism and the usage-side heat exchanger.

According to this, in the defrosting operation mode after the operation of the conveying device is stopped, temperature drop when refrigerant discharged from the compression mechanism flows toward the low pressure side heat source-side heat exchanger can be suppressed, and it is possible to increase the amount of heat which can be utilized for defrosting the heat source-side heat exchanger when the defrosting operation mode is executed. Therefore, it is possible to provide a heat pump system in which the defrosting time is shortened and usability is enhanced.

Furthermore, in the defrosting operation mode, the refrigerant flows through the compression mechanism, the usage-side heat exchanger, the intermediate heat exchanger, the first expansion device and the heat source-side heat exchanger in this order, and the control device sets the opening degree of the second expansion device to a fully closed opening degree, and sets an opening degree of the first expansion device to a fully opened opening degree.

According to this, the control device sets the opening degree of the second expansion device into its fully closed mode and sets the opening degree of the first expansion device into its fully opened mode. Therefore, it is possible to prevent a case in which refrigerant of the main refrigerant circuit flowing through the intermediate heat exchanger after it is discharged from the compression mechanism and it passes through the usage-side heat exchanger radiates heat to refrigerant flowing through the bypass refrigerant circuit in the intermediate heat exchanger, and temperature of the refrigerant is lowered.

Hence, in a state where high temperature of refrigerant discharged from the compression mechanism is maintained as it is, the maximum amount of refrigerant can be supplied to the heat source-side heat exchanger in the first expansion device. Therefore, it is possible to provide a heat pump system in which the defrosting time is shortened and usability is enhanced.

According to a second invention, especially in the first invention, carbon dioxide is used as the refrigerant, the first expansion device is a non-fully closed type expansion valve through which a predetermined amount of refrigerant flows even when a needle sits on a valve seat, and the second expansion device is a fully closed type expansion valve through which refrigerant does not flow if the needle sits on the valve seat.

According to this, the first expansion device is a fully closed type expansion valve. Therefore, in a refrigeration cycle device having high pressure using carbon dioxide (CO2) as refrigerant, even if a needle (not shown) sits on a valve seat (not shown), a predetermined amount (V0) of refrigerant flows. Hence, when the compression mechanism is operated, even if foreign material is mixed in the first expansion device, the first expansion device is not easily fully closed, and pressure rise of high pressure refrigerant can be suppressed.
Therefore, it is possible to enhance the safety.

Further, the second expansion device is a fully closed type expansion valve. According to this, when the valve opening degree of the second expansion device (fully closed type) is fully closed, high pressure refrigerant which flows out from the usage-side heat exchanger and which is distributed toward the second expansion device does not flow toward the intermediate heat exchanger at all.

According to this, since refrigerant does not join up with middle of compression operation of the compression rotation element, it is possible to rise temperature of refrigerant discharged from the compression mechanism and lower the discharge pressure.

According to a third invention, especially in any one of the first or second inventions, the heat pump system further includes a heat medium outlet temperature thermistor for detecting temperature of the usage-side heat medium which flows out from the usage-side heat exchanger, and a heat medium inlet temperature thermistor for detecting temperature of the usage-side heat medium which flows into the usage-side heat exchanger, wherein the control device rotates the compression rotation element when the heating operation mode is executed, the control device operates the conveying device such that a temperature difference between detected temperature of the heat medium outlet temperature thermistor and detected temperature of the heat medium inlet temperature thermistor becomes equal to a target temperature difference, and if the detected temperature of the heat medium outlet temperature thermistor exceeds predetermined temperature, the control device sets the opening degree of the second expansion device to the fully closed opening degree.

According to this, since the heating ability of the radiator becomes equal to a value corresponding to a current heating load, it is possible to provide a liquid heating device having excellent energy saving performance.

An embodiment of the present invention will be described below with reference to the drawings. The invention is not limited to the embodiment. The invention is defined in the claims and only limited by their subject-matter.

### (Embodiment)

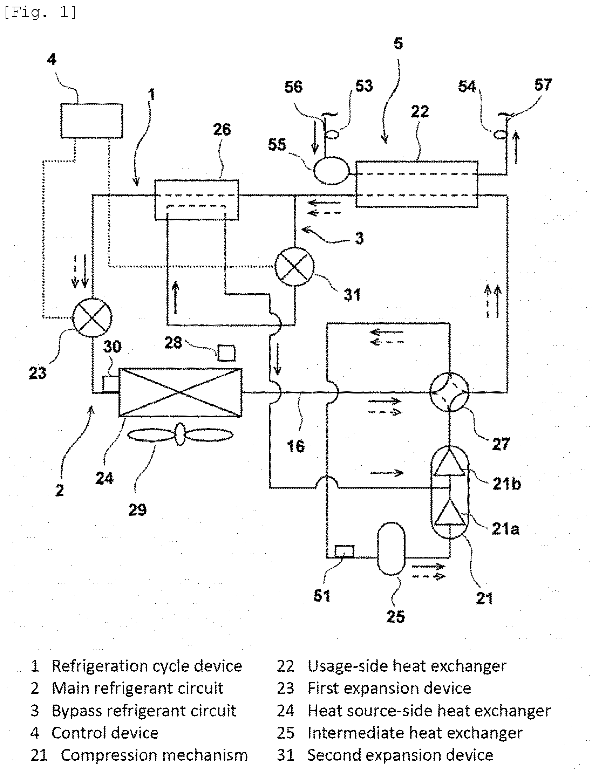

Fig. 1 is a block diagram of a heat pump system in an embodiment of the present invention. The heat pump system is composed of a refrigeration cycle device 1, a usage-side heat medium circuit 5 and a control device 4 which controls operation of a liquid heating device.

The refrigeration cycle device 1 is composed of a main refrigerant circuit 2 and a bypass refrigerant circuit 3.

The main refrigerant circuit 2 is formed by connecting, to one another through pipes 16, a compression mechanism 21, a usage-side heat exchanger 22 which is a radiator, an intermediate heat exchanger 26 which is a cooling heat exchanger, a first expansion device 23 which is a main expansion valve, and a heat source-side heat exchanger 24 which is an evaporator. Carbon dioxide (CO2) is used as refrigerant. A blowing device 29 supplies air to the heat source-side heat exchanger 24.

It is most suitable to use the carbon dioxide as the refrigerant, but it is also possible to use non-azeotropic refrigerant mixture such as R407, pseudoazeotropic refrigerant mixture such as R410A, and single refrigerant such as R32.

The compression mechanism 21 which compresses refrigerant is composed of a low stage-side compression rotation element 21a and a high stage-side compression rotation element 21b. The usage-side heat exchanger 22 heats the usage-side heat medium by refrigerant which is discharged from the high stage-side compression rotation element 21b.

A volume ratio of the low stage-side compression rotation element 21a and the high stage-side compression rotation element 21b is constant, a driving shaft (not shown) is commonly used, and compression rotation elements is composed of one compressor placed in one container.

Although this embodiment is described using the compression mechanism 21 which is composed of the low stage-side compression rotation element 21a and tahe high stage-side compression rotation element 21b, the present invention can also be applied to a single compression rotation element.

When the single compression rotation element is used, a position where refrigerant from the bypass refrigerant circuit 3 joins up is defined as a middle stage location of compression of a compression rotation element, a compression rotation element up to the position where the refrigerant from the bypass refrigerant circuit 3 joins up is defined as the low stage-side compression rotation element 21a, and a compression rotation element after the former position where the refrigerant from the bypass refrigerant circuit 3 joins up is defined as the high stage-side compression rotation element 21b.

The compression mechanism 21 may be composed of the low stage-side compression rotation element 21a and the high stage-side compression rotation element 21b each of which is composed of two compressors.

The bypass refrigerant circuit 3 branches off from the pipe 16 between the usage-side heat exchanger 22 and the first expansion device 23, and is connected to the pipe 16 between the low stage-side compression rotation element 21a and the high stage-side compression rotation element 21b.

The bypass refrigerant circuit 3 is provided with a second expansion device 31 which is a bypass expansion valve. A portion of high pressure refrigerant after it passes through the usage-side heat exchanger 22 or a portion of high pressure refrigerant after it passes through the intermediate heat exchanger 26 is decompressed by the second expansion device 31 and becomes intermediate pressure refrigerant. Thereafter, the intermediate pressure refrigerant exchanges heat with high pressure refrigerant which flows through the main refrigerant circuit 2 in the intermediate heat exchanger 26, and joins up with refrigerant between the low stage-side compression rotation element 21a and the high stage-side compression rotation element 21b.

An accumulator 25 is provided in the pipe 16 between an outlet of the heat source-side heat exchanger 24 and a suction portion of the compression mechanism 21. The accumulator 25 separates gas and liquid from each other. A four-way valve 27 is provided in the pipe 16 of the main refrigerant circuit 2. The four-way valve 27 switches a flow path of high pressure refrigerant discharged from the compression mechanism 21, and flows the high pressure refrigerant to the usage-side heat exchanger 22 or the heat source-side heat exchanger 24.

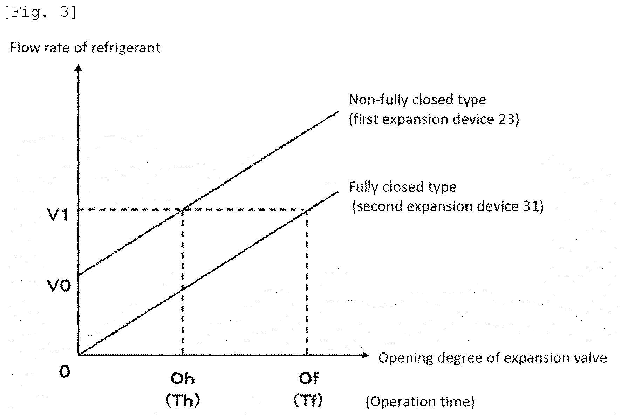

Next, the first expansion device 23 and the second expansion device 31 will be described below using Fig. 3. The first expansion device 23 is a non-fully closed type expansion valve through which a predetermined amount (V0) of refrigerant flows even if a needle (not shown) sits on a valve seat (not shown). The second expansion device 31 is a fully closed-type expansion valve through which refrigerant does not flow (flow rate of refrigerant is 0) if a needle sits on a valve seat.

Since the first expansion device 23 is the non-fully closed type expansion valve, pressure rise of high pressure refrigerant can be suppressed even if carbon dioxide (CO2) is used as refrigerant of the refrigeration cycle device 1, and safety can be enhanced. That is, even if the needle sits on the valve seat, the predetermined amount (V0) of refrigerant flows to the first expansion device 23. Therefore, even if a foreign material is mixed in the first expansion device 23 when the compression mechanism 21 is operated, the first expansion device 23 is not easily fully closed.

Since the second expansion device 31 is the fully-closed type expansion valve, when the valve opening degree of the second expansion device 31 (fully closed type) is fully closed, it is possible to completely prevent a case in which high pressure refrigerant which flows out from the usage-side heat exchanger 22 and which is distributed toward the second expansion device 31 flows toward the intermediate heat exchanger 26.

Hence, since refrigerant from the bypass refrigerant circuit 3 is not sucked into the high stage-side compression rotation element 21b, it is possible to prevent the discharge pressure of the compression mechanism 21 from rising. Therefore, the heating ability in the usage-side heat exchanger 22 can be lowered.

The refrigeration cycle device 1 of the embodiment includes a heating operation mode which is a normal operation mode. The heating operation mode operates the conveying device 55, allows the usage-side heat medium to circulate in the usage-side heat medium circuit 5, and heats the usage-side heat medium in the usage-side heat exchanger 22 by refrigerant discharged from the high stage-side compression rotation element 21b of the compression mechanism 21.

In Fig. 1, solid arrows show flowing directions of refrigerant when the normal heating operation mode is executed. Variation of a state of refrigerant when the normal heating operation mode is executed will be described below.

High pressure refrigerant discharged from the compression mechanism 21 flows into the usage-side heat exchanger 22 through the four-way valve 27 and heats the usage-side heat medium which passes through the usage-side heat exchanger 22. High pressure refrigerant which flows out from the usage-side heat exchanger 22 is distributed to the intermediate heat exchanger 26 and the second expansion device 31. High pressure refrigerant which flows into the intermediate heat exchanger 26 is cooled by the intermediate pressure refrigerant which is decompressed by the second expansion device 31.

The high pressure refrigerant distributed to the first expansion device 23 is decompressed and expanded by the first expansion device 23 and thereafter, the refrigerant flows into the heat source-side heat exchanger 24. The low pressure refrigerant which flows into the heat source-side heat exchanger 24 absorbs heat from air in the heat source-side heat exchanger 24.

The high pressure refrigerant distributed to the second expansion device 31 is decompressed and expanded by the second expansion device 31 and thereafter, the refrigerant flows into the intermediate heat exchanger 26. The intermediate pressure refrigerant which flows into the intermediate heat exchanger 26 is heated by high pressure refrigerant which flows out from the usage-side heat exchanger 22.

Thereafter, the intermediate pressure refrigerant which flows out from the intermediate heat exchanger 26 joins up with intermediate pressure refrigerant which is discharged from the low stage-side compression rotation element 21a of the compression mechanism 21, and is sucked into the high stage-side compression rotation element 21b.

In the usage-side heat medium circuit 5, a heat medium returning pipe 56 and a heat medium going pipe 57 are connected to the usage-side heat exchanger 22. The heat medium returning pipe 56 is provided with a conveying device 55 which is a conveying pump.

By operating the conveying device 55, usage-side heat medium is supplied to the usage-side heat exchanger 22 through the heat medium returning pipe 56, usage-side heat medium heated by the usage-side heat exchanger 22 is supplied from the heat medium going pipe 57 to a hot water tank (not shown) or a heater (not shown) of a floor heating for example.

According to this, a room is heated or hot water is supplied. Thereafter, the usage-side heat medium again returns to the usage-side heat exchanger 22 through the heat medium returning pipe 56. Water or antifreeze liquid is used as the usage-side heat medium.

The control device 4 operates the low stage-side compression rotation element 21a and the high stage-side compression rotation element 21b, and heats circulating water by the usage-side heat exchanger 22. The conveying device 55 is operated such that a temperature difference between detected temperature of the heat medium outlet temperature thermistor 54 and detected temperature of the heat medium inlet temperature thermistor 53 which is a temperature difference of circulating water becomes equal to a target temperature difference.

According to this, high temperature water produced by the usage-side heat exchanger 22 radiates heat in a heating terminal (not shown) and is utilized for space heating, and low temperature water to which heat is radiated in the heating terminal (not shown) is again heated by the usage-side heat exchanger 22. At that time, control is performed such that a temperature difference between detected temperature of the heat medium outlet temperature thermistor 54 and detected temperature of the heat medium inlet temperature thermistor 53 becomes equal to a target temperature difference.

Since a heating load gradually becomes small, the control is performed such that the temperature difference between the detected temperature of the heat medium outlet temperature thermistor 54 and the detected temperature of the heat medium inlet temperature thermistor 53 becomes equal to the target temperature difference. Therefore, the detected temperature of the heat medium outlet temperature thermistor 54 and the detected temperature of the heat medium inlet temperature thermistor 53 gradually rise. If the detected temperature of the heat medium outlet temperature thermistor 54 exceeds predetermined temperature, it is necessary to lower the heating ability in the usage-side heat exchanger 22. Therefore, the control device 4 performs control in the following manner.

That is, when the detected temperature of the heat medium outlet temperature thermistor 54 exceeds the predetermined temperature, at least one of following two controls is performed: 1) operational frequencies of the low stage-side compression rotation element 21a and the high stage-side compression rotation element 21b are reduced, and 2) the first expansion device 23 is operated such that its valve opening degree becomes large, and the opening degree is set to such a value that a predetermined amount of refrigerant flows.

In addition to this, the second expansion device 31 (fully closed type) is fully closed, and high pressure refrigerant which flows out from the usage-side heat exchanger 22 and which is distributed toward the second expansion device 31 is prevented from flowing to the intermediate heat exchanger 26.

Hence, since refrigerant from the bypass refrigerant circuit 3 is not sucked into the high stage-side compression rotation element 21b, it is possible to prevent discharge pressure of the compression mechanism 21 from rising, and the heating ability in the usage-side heat exchanger 22 can be lowered.

According to this, the heating ability in the usage-side heat exchanger 22 becomes equal to a value corresponding to the current heating load, the usage-side heat exchanger 22 can be utilized as a hot water heater having excellent energy-saving performance.

A pressure sensor 51 as a low pressure-side detector is provided in the low pressure-side pipe 16 of the main refrigerant circuit 2 which connects a downstream side of the first expansion device 23 and a suction side of the compression mechanism 21 to each other. The pressure sensor 51 detects low pressure-side evaporating pressure.

The low pressure-side detector may be provided in the low pressure-side pipe 16 of the main refrigerant circuit 2 which connects the downstream side of the first expansion device 23 and the suction side of the compression mechanism 21 to each other. As the low pressure-side detector of this case, it is possible to use an evaporating temperature thermistor 30 which detects evaporating temperature of refrigerant in a low pressure-side gas-liquid two layer state.

A temperature thermistor 28 is provided around the heat source-side heat exchanger 24. By driving a fan 29, the temperature thermistor 28 detects temperature of air which supplies heat to the heat source-side heat exchanger 24.

When temperature of air detected by the temperature thermistor 28, i.e., temperature of air which supplies heat to the heat source-side heat exchanger 24 is equal to or higher than a predetermined value, since heat can sufficiently be absorbed from the heat source-side heat exchanger 24, heating ability of the usage-side heat exchanger 22 can sufficiently be exhibited. Therefore, while the temperature thermistor 28 is detecting temperature of the predetermined value or high, the valve opening degree of the second expansion device 31 (fully closed type) may be fully closed during execution of the heating operation mode.

Further, the refrigeration cycle device 1 also includes a defrosting operation mode for defrosting the heat source-side heat exchanger 24 by refrigerant discharged from the high stage-side compression rotation element 21b of the compression mechanism 21.

When detected pressure of the pressure sensor 51 or detected temperature of the evaporating temperature thermistor 30 becomes equal to or lower than respective predetermined value, it is determined that frost is formed on the heat source-side heat exchanger 24. When temperature of air which supplies heat to the heat source-side heat exchanger 24 detected by the temperature thermistor 28 is equal to or lower than a predetermined value and execution time of the heating operation mode is continued for more than predetermined time in this state, it is determined that frost is formed on the heat source-side heat exchanger 24. If it is determined that frost is formed on the heat source-side heat exchanger 24, a defrosting operation mode is carried out. In the defrosting operation mode, the frost formed on the heat source-side heat exchanger 24 is melted and removed by heat of refrigerant discharged from the high stage-side compression rotation element 21b of the compression mechanism 21.

As a typical defrosting operation mode, there is a reverse cycle defrosting type defrosting operation mode. In the reverse cycle defrosting type defrosting operation mode, flow paths with which a four-way valve 27 is in communication are switched when the heating operation mode is executed, thereby reversing a circulation direction of refrigerant. That is, high temperature and high pressure refrigerant discharged from the compression mechanism 21 is made to flow into the heat source-side heat exchanger 24, and frost of the heat source-side heat exchanger 24 is melted by condensation heat of the high temperature and high pressure refrigerant.

There also exists a hot gas defrosting type defrosting operation mode in which a four-way valve 27 is not switched, a flow path which is the same as that when the heating operation mode is executed and with which the four-way valve 27 is in communication is used, and high temperature and high pressure refrigerant discharged from the compression mechanism 21 is made to flow into the usage-side heat exchanger 22. In the hot gas defrosting type defrosting operation mode, a valve opening degree of the first expansion device 23 is made large, high temperature and high pressure gas refrigerant discharged from the compression mechanism 21 is made to pass through the first expansion device 23 without decompressing the gas refrigerant and thereafter, the gas refrigerant is made to flow into the heat source-side heat exchanger 24 to melt frost of the heat source-side heat exchanger 24.

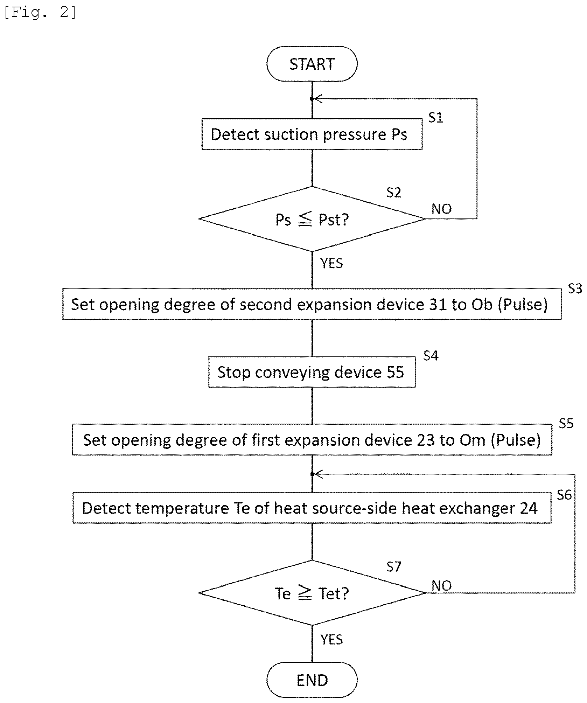

A control flow of the defrosting operation mode in the embodiment will be described using Fig. 2.

As shown in Fig. 2, in a state of execution of the heating operation mode in which the compression mechanism 21 and the conveying device 55 are operated, suction pressure Ps of the low stage-side compression rotation element 21a is detected by the pressure sensor 51 (step 1).

That is, it is determined whether the suction pressure Ps of the low stage-side compression rotation element 21a detected by the pressure sensor 51 is equal to or lower than predetermined pressure Pst (step 2).

When the suction pressure Ps of the low stage-side compression rotation element 21a detected by the pressure sensor 51 is equal to or lower than the predetermined pressure Pst, the control device 4 sets the valve opening degree of the second expansion device 31 to Ob (Pulse) which is set in the control device 4 (step 3).

Here, Ob (Pulse) is the minimum valve opening degree, i.e., a fully closed state. Therefore, at this time, the control device 4 operates the valve opening degree of the second expansion device 31 in the closing direction.

According to this, since a flow rate of refrigerant which joins up, from the bypass refrigerant circuit 3, with refrigerant which is in middle of the compression operation of the compression mechanism 21 is reduced, temperature of refrigerant discharged from the compression mechanism 21 rises and discharge pressure is lowered.

Next, the control device 4 stops the operation of the conveying device 55 (step 4). According to this, the control device 4 stops the heating operation mode.

Further, since the control device 4 also stops the operation of the conveying device 55, a radiation amount to the usage-side heat medium in the usage-side heat exchanger 22 is suppressed, and pressure and temperature of refrigerant discharged from the compression mechanism 21 are further increased. Therefore, temperature of the compression mechanism 21 and the usage-side heat exchanger 22 further rises.

Here, when the valve opening degree of the second expansion device 31 is operated in the closing direction, discharge pressure is once lowered. Therefore, if the operation of the conveying device 55 is stopped after the valve opening degree of the second expansion device 31 is operated in the closing direction, it is possible to prevent temperature and pressure of refrigerant discharged from the compression mechanism 21 from excessively increasing.

When the operation mode is shifted to the defrosting operation mode, the opening degree of the second expansion device 31 is operated in the closing direction while the heating operation mode is executed before execution of the defrosting operation mode is started, and temperature and pressure of refrigerant discharged from the compression mechanism 21 are increased in a stepwise manner. According to this, it is possible to prevent the heating operation mode from stopping.

The control device 4 sets the valve opening degree of the first expansion device 23 to Om (Pulse) which is set in the control device 4 (step 5).

Here, Om (Pulse) is the maximum valve opening degree, i.e., a fully opened state. Therefore, at this time, the control device 4 operates the valve opening degree of the first expansion device 23 in the opening direction.

That is, the control device 4 brings the valve opening degree of the first expansion device 23 to the maximum valve opening degree, i.e., the fully opened state. According to this, in a state where temperature of refrigerant discharged from the compression mechanism 21 is maintained high, supply of the maximum amount in the first expansion device 23 to the heat source-side heat exchanger 24 is started. Therefore, this is defined as execution start time of the defrosting operation mode.

In the defrosting operation mode after the operation of the conveying device 55 is stopped, when refrigerant flows from the high pressure side to the low pressure-side heat source-side heat exchanger 24, potential heat of the compression mechanism 21 and the usage-side heat exchanger 22 can be obtained in addition to heat produced in the compression process by the compression mechanism 21.

According to this, in the defrosting operation mode after the operation of the conveying device 55 is stopped, temperature drop when refrigerant discharged from the compression mechanism 21 flows toward the low pressure-side heat source-side heat exchanger 24 can be suppressed, and it is possible to increase the amount of heat which can be utilized for defrosting the heat source-side heat exchanger 24 when the defrosting operation mode is executed. Therefore, it is possible to provide a heat pump system in which defrosting time is shortened and usability is enhanced.

During execution of the defrosting operation mode, the control device 4 determines whether a defrosting-operation completion condition is established based on temperature Te of the heat source-side heat exchanger 24 detected by the evaporation temperature thermistor 30 which detects evaporation temperature of refrigerant in the low pressure-side gas-liquid two layer state (step 6).

That is, when temperature Te of the heat source-side heat exchanger 24 detected by the evaporating temperature thermistor 30 is lower than predetermined temperature Tet, the procedure is returned to step 6, and the control device 4 continues the defrosting operation mode.

When the temperature Te of the heat source-side heat exchanger 24 detected by the evaporating temperature thermistor 30 is equal to or higher than the predetermined temperature Tet on the other hand, the control device 4 terminates the defrosting operation mode. Then, the control device 4 again starts the operation of the conveying device 55, adjusts the valve opening degrees of the first expansion device 23 and the second expansion device 31, and starts re-execution of the heating operation mode.

Next, variation of the state of refrigerant in the defrosting operation mode will be described using Fig. 1.

Broken arrows described in Fig. 1 show a flowing direction of refrigerant when the defrosting operation mode is executed using a forward cycle defrosting method.

High pressure refrigerant discharged from the compression mechanism 21 flows into the usage-side heat exchanger 22 through the four-way valve 27. Refrigerant which flows out from the usage-side heat exchanger 22 passes through the first expansion device 23 and then flows into the heat source-side heat exchanger 24, radiates heat to accumulated frost and melts the frost.

Gas-liquid two layered refrigerant which radiates heat in the heat source-side heat exchanger 24 and flows out from the heat source-side heat exchanger 24 flows into the accumulator 25 and gas and liquid are separated from each other. Gas phase refrigerant again returns to the compression mechanism 21.

In this case, since high temperature discharged refrigerant flows into the usage-side heat exchanger 22 also during execution of the defrosting operation mode, temperature drop of the usage-side heat exchanger 22 is suppressed. Therefore, heating ability in the heating operation mode which is started after the defrosting operation mode is executed is enhanced faster than the defrosting operation mode in the reversed cycle.

To enhance the defrosting efficiency, circulation of the usage-side heat medium flowing through the usage-side heat exchanger 22, i.e., operation of the conveying device 55 is stopped so that the usage-side heat medium does not flow through the usage-side heat exchanger 22, and an amount of heat which is radiated to the usage-side heat medium is reduced.

To prevent temperature of refrigerant which flows into the heat source-side heat exchanger 24 from lowering, the valve opening degree of the second expansion device 31 (fully closed type) is fully closed. According to this, high pressure refrigerant which flows out from the usage-side heat exchanger 22 and which is distributed toward the second expansion device 31 is prevented from flowing toward the intermediate heat exchanger 26.

Hence, refrigerant which is discharged from the compression mechanism 21 and flows into the usage-side heat exchanger 22 through the four-way valve 27 and flows out from the usage-side heat exchanger 22 and flows through the main refrigerant circuit 2 of the intermediate heat exchanger 26 is not cooled by refrigerant which flows through the second expansion device 31 of the intermediate heat exchanger 26. Therefore, it is possible to prevent temperature of refrigerant which flows into the heat source-side heat exchanger 24 from lowering.

Further, the compression mechanism 21 is operated such that the opening degree of the first expansion device 23 is fully opened and the maximum amount of refrigerant flows through the first expansion device 23. Therefore, the maximum amount of refrigerant which is discharged from the compression mechanism 21 can be supplied to the heat source-side heat exchanger 24 in a state where temperature of the refrigerant is maintained high. Hence, it is possible to shorten the defrosting time in the defrosting operation mode in the forward cycle, and it is possible to provide a refrigeration cycle device in which usability is enhanced.

It is not absolutely necessary that the bypass refrigerant circuit 3 branches off from the main refrigerant circuit 2 between the usage-side heat exchanger 22 and the intermediate heat exchanger 26, and the bypass refrigerant circuit 3 may branch off from the main refrigerant circuit 2 between the intermediate heat exchanger 26 and the first expansion device 23.

The fully opened state of the opening degree of the first expansion device 23, i.e., the maximum valve opening degree includes an opening degree which is different from the fully opened state only if this opening degree allows a value which is close to the maximum amount of refrigerant to flow through the first expansion device 23.

### [Industrial Applicability]

As described above, the present invention can provide a heat pump system in which defrosting time is shortened and usability is enhanced. Therefore, the invention is useful for a hot water supplying system, a heater and the like.

### [EXPLANATION OF SYMBOLS]

- 1: refrigeration cycle device
- 2: main refrigerant circuit
- 3: bypass refrigerant circuit
- 4: control device
- 5: usage-side heat medium circuit
- 16: pipe
- 21: compression mechanism
- 21a: low stage-side compression rotation element
- 21b: high stage-side compression rotation element
- 22: usage-side heat exchanger (radiator)
- 23: first expansion device (main expansion valve)
- 24: heat source-side heat exchanger (evaporator)
- 26: intermediate heat exchanger (cooling heat exchanger)
- 30: evaporating temperature thermistor
- 31: second expansion device (bypass expansion valve)
- 53: heat medium inlet temperature thermistor
- 54: heat medium outlet temperature thermistor
- 55: conveying device (conveying device)
- 56: heat medium returning pipe
- 57: heat medium going pipe

## Claims

1. A heat pump system comprising
a refrigeration cycle device (1), a usage-side heat medium circuit (5) which circulates usage-side heat medium by a conveying device (55), and a control device (4), in which
the refrigeration cycle device (1) includes: a main refrigerant circuit (2) formed by sequentially connecting, to one another through a pipe (16), a compression mechanism (21) composed of a compression rotation element, a usage-side heat exchanger (22) for heating the usage-side heat medium by refrigerant discharged from the compression mechanism (21), an intermediate heat exchanger (26), a first expansion device (23) and a heat source-side heat exchanger (24); and
a bypass refrigerant circuit (3) which is branched off from the pipe (16) between the usage-side heat exchanger (22) and the first expansion device (23) and joins up with refrigerant which is in middle of a compression operation of the compression rotation element,
the bypass refrigerant circuit (3) provides a second expansion device (31); and the refrigerant flowing in the bypass refrigerant circuit (3) downstream side from the second expansion device (31) is exchanging heat with the refrigerant flowing in the main refrigerant circuit (2) in the intermediate heat exchanger (26); wherein
the heat pump system includes a heating operation mode in which the usage-side heat medium is heated in the usage-side heat exchanger (22) by refrigerant discharged from the compression mechanism (21), and
the refrigerant flows through the compression mechanism (21), the usage-side heat exchanger (22), the intermediate heat exchanger (26), the first expansion device (23) and the heat source-side heat exchanger (24) in this order in a defrosting operation mode in which the heat source-side heat exchanger (24) is defrosted by refrigerant discharged from the compression mechanism (21),
**characterized in that** the control device (4) sets the opening degree of the second expansion device (31) to a fully closed opening degree when the heating operation mode is shifted to the defrosting operation mode during execution of the heating operation mode, and
the control device (4) stops operation of the conveying device (55), and stops the heating operation mode after closing fully the opening degree of the second expansion device (31), and
shifts to the defrosting operation mode by stopping of the heating operation mode and setting an opening degree of the first expansion valve (23) to a fully opened opening degree.

2. The heat pump system according to claim 1, wherein carbon dioxide is used as the refrigerant, the first expansion device (23) is a non-fully closed type expansion valve through which a predetermined amount of refrigerant flows even when a needle sits on a valve seat, and the second expansion device (31) is a fully closed type expansion valve through which refrigerant does not flow if the needle sits on the valve seat.

3. The heat pump system according to claims 1 or 2, further comprising a heat medium outlet temperature thermistor (54) for detecting temperature of the usage-side heat medium which flows out from the usage-side heat exchanger (22), and a heat medium inlet temperature thermistor (53) for detecting temperature of the usage-side heat medium which flows into the usage-side heat exchanger (22), wherein the control device (4) rotates the compression rotation element when the heating operation mode is executed, the control device (4) operates the conveying device (55) such that a temperature difference between detected temperature of the heat medium outlet temperature thermistor (54) and detected temperature of the heat medium inlet temperature thermistor (53) becomes equal to a target temperature difference, and if the detected temperature of the heat medium outlet temperature thermistor (54) exceeds predetermined temperature, the control device (4) sets the opening degree of the second expansion device (31) to the fully closed opening degree.

## Patentansprüche

1. Wärmepumpensystem, umfassend:
eine Kältekreislaufvorrichtung (1), einen nutzungsseitigen Heizmediumkreislauf (5), der das nutzungsseitige Heizmedium mittels einer Fördervorrichtung (55) umwälzt, und eine Steuervorrichtung (4), wobei die Kältekreislaufvorrichtung (1) enthält:
einen Hauptkältemittelkreislauf (2), der dadurch ausgebildet ist, dass eine Kompressionseinrichtung (21), die aus einem Kompressionsrotationselement besteht, ein nutzungsseitiger Wärmetauscher (22) zum Erhitzen des nutzungsseitigen Heizmediums durch das von der Kompressionseinrichtung (21) abgegebene Kältemittel, ein Zwischenwärmetauscher (26), eine erste Expansionsvorrichtung (23) und ein wärmequellenseitiger Wärmetauscher (24) sequentiell über eine Leitung (16) miteinander verbunden sind; und
einen Nebenstrom-Kältemittelkreislauf (3), der von der Leitung (16) zwischen dem nutzungsseitigen Wärmetauscher (22) und der ersten Expansionsvorrichtung (23) abzweigt und sich mit Kältemittel vereinigt, das sich inmitten eines Kompressionsvorgangs des Kompressionsrotationselements befindet,
wobei der Nebenstrom-Kältemittelkreislauf (3) eine zweite Expansionsvorrichtung (31) bereitstellt; und
das im Nebenstrom-Kältemittelkreislauf (3) stromabwärts von der zweiten Expansionsvorrichtung (31) fließende Kältemittel im Zwischenwärmetauscher (26) Wärme mit dem im Hauptkältemittelkreislauf (2) fließenden Kältemittel austauscht;
wobei das Wärmepumpensystem einen Heizbetriebsmodus aufweist, in dem das nutzungsseitige Heizmedium in dem nutzungsseitigen Wärmetauscher (22) durch aus der Kompressionseinrichtung (21) austretendes Kältemittel erwärmt wird, und
das Kältemittel durch die Kompressionseinrichtung (21), den nutzungsseitigen Wärmetauscher (22), den Zwischenwärmetauscher (26), die erste Expansionseinrichtung (23) und den wärmequellenseitigen Wärmetauscher (24) in dieser Reihenfolge in einem Enteisungsbetriebsmodus strömt, in dem der wärmequellenseitige Wärmetauscher (24) durch aus der Kompressionseinrichtung (21) austretendes Kältemittel enteist wird,
**dadurch gekennzeichnet, dass**
die Steuervorrichtung (4) den Öffnungsgrad der zweiten Expansionsvorrichtung (31) auf einen vollständig geschlossenen Öffnungsgrad einstellt, wenn der Heizbetriebsmodus während der Ausführung des Heizbetriebsmodus in den Enteisungsbetriebsmodus umgeschaltet wird, und
die Steuervorrichtung (4) den Betrieb der Fördervorrichtung (55) stoppt und den Heizbetriebsmodus stoppt, nachdem der Öffnungsgrad der zweiten Expansionsvorrichtung (31) vollständig geschlossen worden ist, und
in den Enteisungsbetriebsmodus umschaltet, indem sie den Heizbetriebsmodus stoppt und einen Öffnungsgrad des ersten Expansionsventils (23) auf einen vollständig geöffneten Öffnungsgrad einstellt.

2. Wärmepumpensystem nach Anspruch 1, wobei Kohlendioxid als Kältemittel verwendet wird, die erste Expansionsvorrichtung (23) ein Expansionsventil eines nicht vollständig geschlossenen Typs ist, durch das eine vorbestimmte Menge an Kältemittel fließt, selbst wenn eine Nadel auf einem Ventilsitz sitzt, und die zweite Expansionsvorrichtung (31) ein Expansionsventil eines vollständig geschlossenen Typs ist, durch das kein Kältemittel fließt, wenn die Nadel auf dem Ventilsitz sitzt.

3. Wärmepumpensystem nach Anspruch 1 oder 2, ferner umfassend einen Heizmedium-Auslasstemperatur-Thermistor (54) zum Erfassen der Temperatur des nutzungsseitigen Heizmediums, das aus dem nutzungsseitigen Wärmetauscher (22) ausströmt, und einen Heizmedium-Einlasstemperatur-Thermistor (53) zum Erfassen der Temperatur des nutzungsseitigen Heizmediums, das in den nutzungsseitigen Wärmetauscher (22) einströmt, wobei die Steuervorrichtung (4) das Kompressionsrotationselement dreht, wenn der Heizbetriebsmodus ausgeführt wird, wobei die Steuervorrichtung (4) die Fördervorrichtung (55) so betreibt, dass eine Temperaturdifferenz zwischen der erfassten Temperatur des Heizmedium-Auslasstemperatur-Thermistors (54) und der erfassten Temperatur des Heizmedium-Einlasstemperatur-Thermistors (53) gleich einer Soll-Temperaturdifferenz wird, und dann, wenn die erfasste Temperatur des Heizmedium-Auslasstemperatur-Thermistors (54) eine vorbestimmte Temperatur überschreitet, die Steuervorrichtung (4) den Öffnungsgrad der zweiten Expansionsvorrichtung (31) auf den vollständig geschlossenen Öffnungsgrad einstellt.

## Revendications

1. Système de pompe à chaleur comprenant
un dispositif à cycle de réfrigération (1), un circuit à agent caloporteur côté utilisation (5) qui fait circuler un agent caloporteur côté utilisation par un dispositif de transport (55), et un dispositif de commande (4),
le dispositif à cycle de réfrigération (1) comprenant :
un circuit à fluide frigorigène principal (2) formé par liaison séquentielle, l'un à l'autre par l'intermédiaire d'un tuyau (16), d'un mécanisme de compression (21) composé d'un élément de rotation de compression, d'un échangeur de chaleur côté utilisation (22) destiné à chauffer l'agent caloporteur côté utilisation par le fluide frigorigène évacué du mécanisme de compression (21), d'un échangeur de chaleur intermédiaire (26), d'un premier dispositif d'expansion (23) et d'un échangeur de chaleur côté source de chaleur (24) ; et
un circuit à fluide frigorigène de dérivation (3) qui est dérivé du tuyau (16) entre l'échangeur de chaleur côté utilisation (22) et le premier dispositif d'expansion (23) et qui rejoint le fluide frigorigène qui est au milieu d'une opération de compression de l'élément de rotation de compression,
le circuit à fluide frigorigène de dérivation (3) fournissant un second dispositif d'expansion (31) ; et
le fluide frigorigène s'écoulant dans le circuit à fluide frigorigène de dérivation (3) en aval du second dispositif d'expansion (31) échangeant de la chaleur avec le fluide frigorigène s'écoulant dans le circuit à fluide frigorigène principal (2) dans l'échangeur de chaleur intermédiaire (26) ;
le système de pompe à chaleur comprenant un mode de fonctionnement de chauffage, dans lequel l'agent caloporteur côté utilisation est chauffé dans l'échangeur de chaleur côté utilisation (22) par du fluide frigorigène évacué du mécanisme de compression (21) et
le fluide frigorigène s'écoulant à travers le mécanisme de compression (21), l'échangeur de chaleur côté utilisation (22), l'échangeur de chaleur intermédiaire (26), le premier dispositif d'expansion (23) et l'échangeur de chaleur côté source de chaleur (24) dans cet ordre dans un mode de fonctionnement de dégivrage dans lequel l'échangeur de chaleur côté source de chaleur (24) est dégivré par le fluide frigorigène évacué du mécanisme de compression (21),
**caractérisé en ce que**
le dispositif de commande (4) règle le degré d'ouverture du second dispositif d'expansion (31) à un degré d'ouverture complètement fermé lorsque le mode de fonctionnement de chauffage passe au mode de fonctionnement de dégivrage pendant l'exécution du mode de fonctionnement de chauffage et
le dispositif de commande (4) arrête le fonctionnement du dispositif de transport (55) et arrête le mode de fonctionnement de chauffage après la fermeture complète du degré d'ouverture du second dispositif d'expansion (31) et
passe au mode de fonctionnement de dégivrage par arrêt du mode de fonctionnement de chauffage et réglage d'un degré d'ouverture du premier détendeur (23) à un degré d'ouverture complètement ouvert.

2. Système de pompe à chaleur selon la revendication 1, du dioxyde de carbone étant utilisé en tant que fluide frigorigène, le premier dispositif d'expansion (23) étant un détendeur de type non complètement fermé à travers lequel une quantité prédéterminée de fluide frigorigène s'écoule même lorsqu'une aiguille repose sur un siège de soupape et le second dispositif d'expansion (31) étant un détendeur de type entièrement fermé à travers lequel le fluide frigorigène ne s'écoule pas si l'aiguille repose sur le siège de soupape.

3. Système de pompe à chaleur selon les revendications 1 ou 2, comprenant en outre une thermistance (54) de température de sortie d'agent caloporteur destinée à détecter la température de l'agent caloporteur côté utilisation qui s'écoule hors de l'échangeur de chaleur côté utilisateur (22), et une thermistance (53) de température d'entrée d'agent caloporteur destinée à détecter la température de l'agent caloporteur côté utilisation qui s'écoule dans l'échangeur de chaleur côté utilisation (22), le dispositif de commande (4) faisant tourner l'élément de rotation de compression lorsque le mode de fonctionnement de chauffage est exécuté, le dispositif de commande (4) actionnant le dispositif de transport (55) de telle sorte qu'une différence de température entre la température détectée de la thermistance (54) de température de sortie d'agent caloporteur et la température détectée de la thermistance (53) de température d'entrée d'agent caloporteur devient égale à une différence de température cible et si la température détectée de la thermistance (54) de température de sortie d'agent caloporteur dépasse une température prédéterminée, le dispositif de commande (4) règle le degré d'ouverture du second dispositif d'expansion (31) au degré d'ouverture complètement fermé.
